# EUROPÄISCHE PATENTSCHRIFT

(11) **EP 0 543 207 B1**
(45) Veröffentlichungstag und Bekanntmachung des Hinweises auf die Patenterteilung: **18.10.1995**
(21) Anmeldenummer: 92118773.8
(22) Anmeldetag: 02.11.1992
(51) Int. Cl.: B60N 2/50

(54) **Verfahren und Vorrichtung zur Einstellung und Konstanthaltung der Höhe eines gefederten Personensitzes**
Method and device for adjustment and keeping constant the height of a suspension driver's seat
Méthode et dispositif pour l'ajustage et le réglage à hauteur constante d'un siège d'un véhicule à suspension

(30) Priorität: 14.11.1991 DE 4137509
(43) Veröffentlichungstag der Anmeldung: 26.05.1993
(73) Patentinhaber: SIEMENS AKTIENGESELLSCHAFT, 80333 München (DE)
(72) Erfinder: Schmidt, Klaus, Dipl.-Ing., W-8542 Roth (DE); Stecher, Werner, Dipl.-Ing., W-8549 Abenberg (DE)

(56) Entgegenhaltungen:
- EP-A- 0 059 870
- WO-A-91/04168
- BE-A- 900 547
- DE-A- 3 312 732
- DE-B- 2 736 242
- US-A- 4 589 620

## Beschreibung

Die Erfindung betrifft ein Verfahren und eine Vorrichtung zur Einstellung und störgrößenunabhängigen Aufrechterhaltung der absoluten Sitzflächenhöhe eines gefederten Personensitzes insbesondere in einem Kraftfahrzeug.

Auf gefederte Personensitze, welche auf einer nicht ortsfesten Unterlage ruhen bzw. montiert sind, wirken eine Vielzahl von äußeren Störgrößen ein. Dies betrifft insbesondere Sitze z.B. in den Führerständen von Lastkraftwagen, Bussen, Baumaschinen, schienengebundenen Fahrzeugen und vielem mehr. Hierbei soll trotz aller äußerer Einflüsse und trotz der vorübergehenden Wirkung einer Sitzfederung die vom Fahrer entsprechend seiner individuellen Körpergröße vorgegebene Sitzflächenhöhe im zeitlichen Mittel aufrechterhalten werden.

Dabei besteht zum einen das Problem, daß Personen mit annähernd gleicher Körpergröße unterschiedliche Körpergewichte aufweisen können. Eine schwere Person wird somit bereits im stationären Fall stärker in den Sitz "einsinken", d.h. die Sitzfederung vorspannen, als eine gleich große Person mit geringerem Körpergewicht. So besteht eine Aufgabe darin, daß der im wesentlichen von der Körpergröße abhängige Sollwert für die Sitzflächenhöhe vom Istwert zumindest unabhängig vom individuellen Körpergewicht der auf dem Sitz ruhenden Person eingehalten wird.

In der Praxis wirken auf einen Sitz, welcher Mittel zur Sitzhöheneinstellung und eine Sitzfederung aufweist, noch eine Vielzahl von anderen, insbesondere dynamischen Störgrößen ein, welche den sich tatsächlich einstellenden Istwert der absoluten Sitzflächenhöhe beeinflussen. So ist die Aufstellfläche eines Sitzes z.B. in einem Lastkraftwagen horizontalen Stößen unterschiedlicher Amplitude und Frequenz ausgesetzt, welche z.B. von Fahrbahnunebenheiten und motorbedingten Schwingungen herrühren und auch von der jeweiligen Beladung des Kraftfahrzeuges abhängen können. Derartige Einflüsse rufen über die Sitzfederung zumindest vorübergehende, unter Umständen auch stationäre Abweichungen der tatsächlichen Sitzflächenhöhe vom körpergrößenoptimal eingestellten Sollwert hervor.

Als weitere Einflußgrößen treten der Verschleiß, der Schmierungszustand und der Verschmutzungsgrad der Sitzmechanik auf. So kann die Mechanik bei längerer Benutzung schwergängiger werden. Der Hub der Sitzfederung bei der Auspendelung z.B. von Fahrbahnunebenheiten wird geringer, und größere innere Gleit- und Haftreibungskräfte verursachen einen früheren Stillstand bzw. eine verzögertes Ansprechen der Sitzfederung. Bei starkem Verschleiß kann auch der umgekehrte Fall auftreten, daß nämlich die Mechanik an innerer Spannung verliert und ein erhebliches Spiel aufweist. Auch in diesem Fall können im Verlauf der Benutzung eines Sitzes zunehmende, stationäre Abweichungen zwischen Soll-und Istwert der absoluten Sitzflächenhöhe auftreten.

Schließlich wirken auch klimatische Umwelteinflüsse, insbesondere Luftfeuchtigkeit und Umgebungstemperatur, auf die Gängigkeit der Sitzmechanik ein. So kann z.B. im Winter bei einem Kaltstart eines Kraftfahrzeuges der Fall auftreten, daß die Sitzmechanik vorübergehend schwergängig ist, der Istwert der absoluten Sitzflächenhöhe aber mit zunehmender Erwärmung im Fahrzeuginneren, z.B. aufgrund von Sonneneinstrahlung, langsam absinkt und einen tieferliegenden stationären Zustand einnimmt. Trotz ursprünglich körpergrößenoptimal eingestellter Sitzflächenhöhe tritt somit im Betrieb im zeitlichen Mittel eine stationäre Veränderung der Sitzflächenhöhe auf. Schließlich können sich auch wechselnde Feuchtigkeitsverhältnisse z.B. bei Regen und Schnee auf die Gängigkeit der Sitzmechanik auswirken.

Aus der DE 27 36 242 A1, DE 33 12 732 A1 und US 4 589 620 sind bereits gefederte Personensitze bekannt, bei denen eine vorgegebene Soll-Mittellage des Sitzes unabhängig vom Gewicht der darauf ruhenden Person aufrechterhalten wird. Den bekannten Ausführungen liegt das gemeinsame Prinzip zugrunde, daß mindestens zwei ortsfeste, übereinander angeordnete, komparatorartige Detektorelemente vorhanden sind, welche unzulässig hohe Abweichungen des Istwertes der Sitzhöhe von der Soll-Mittelage erfassen. Bei Auftreten eines binären Ansprechsignales vom oberen bzw. unteren Detektorelement wird der Sitz abgesenkt bzw. angehoben. Die Funktionsweise der bekannten Ausführung entspricht somit prinzipiell dem eines Zweipunktreglers. Diese Anordnungen haben den Nachteil, daß der Abstand der beiden übereinander liegenden Grenzwertschalter relativ groß gewählt werden muß. Hierdurch wird aber zum einen die Schwingfähigkeit der Sitzfederung zum Ausgleich von Stößen beeinträchtigt. Zum anderen ist die vorgegebene Soll-Mittellage nur mit einer relativ großen Ungenauigkeit, welche vom Abstand der übereinander liegenden Grenzwertschalter abhängt, erreichbar.

Demgegenüber liegt der Erfindung die Aufgabe zugrunde, ein Verfahren und eine Vorrichtung anzugeben, mit deren Hilfe ein vorgegebener Sollwert für die absolute Sitzflächenhöhe mit sehr großer Genauigkeit eingestellt und aufrechterhalten werden kann, ohne daß hierdurch die Schwingfähigkeit des Sitzes zum federnden Ausgleich von Stößen beeinträchtigt wird.

Die Aufgabe wird gelöst mit dem im Anspruch 1 enthaltenen Verfahren und der im Anspruch 3 enthaltenen Vorrichtung. Vorteilhafte weitere Ausführungsformen der Erfindung sind in den Unteransprüchen angegeben.

Die Erfindung wird des weiteren unter Zuhilfenahme eines in den nachfolgend kurz angeführten Figuren dargestellten, bevorzugten Ausführungsbeispieles näher erläutet. Dabei zeigen:
- FIG. 1: beispielhaft die Seitenansicht eines Personensitzes mit den erfindungsgemäßen, separaten Mitteln zur Bereitstellung des stationären Grundanteiles und des quasistationären Regelanteiles der absoluten Sitzflächenhöhe,
- FIG. 2: einen ersten Teil einer beispielhaften, programmtechnischen Realisierung der erfindungsgemäßen Regelvorrichtung für die Beeinflussung des quasistationären Regelanteiles, welche die Istwerterfassung und die Unterdrückung von Stelleingriffen bei nur kurzzeitigen Schwingungen des Sitzes betrifft,
- FIG. 3: einen zweiten Teil der programmtechnischen Realisierung in Fortsetzung von FIG. 2, welcher die Mittelwertbildung des quasistationären Regelanteiles und die stufenweise Aktivierung der gefederten Höheneinstellmittel mit veränderbaren Aktivierungszeitdauern betrifft,
- FIG. 4: einen Unterprogrammteil für die beispielhafte, programmtechnische Realisierung gemäß den Figuren 2 und 3, welche die Änderung der Aktivierungszeitdauern für die gefederten Höheneinstellmittel betrifft,
- FIG. 5: einen weiteren Unterprogrammteil für die programmtechnische Realisierung gemäß den Figuren 2 und 3, welcher das stufenweise Anheben der gefederten Höheneinstellmittel betrifft, und
- FIG. 6: einen letzten Unterprogrammteil, welcher das stufenweise Absenken der gefederten Höheneinstellmittel betrifft.

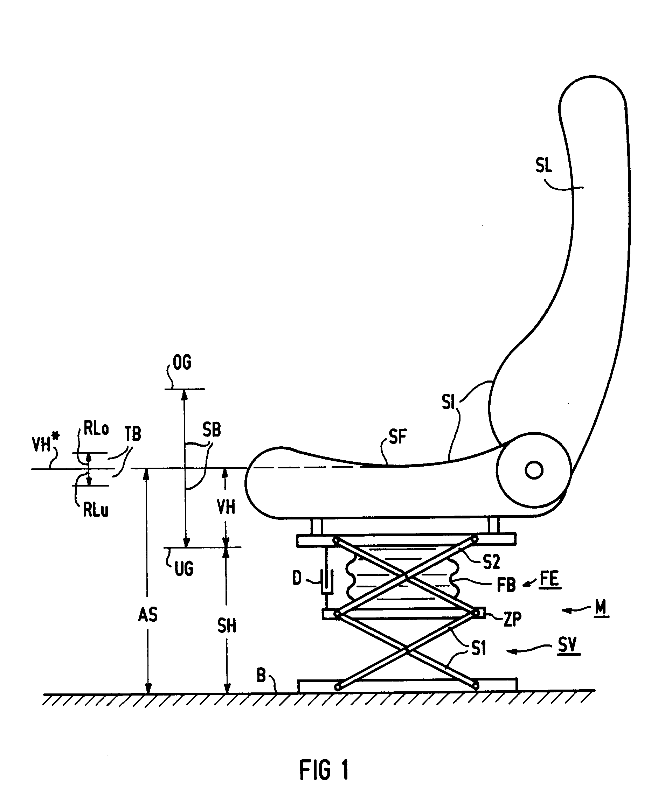

Die FIG. 1 zeigt die Seitenansicht eines beispielhaft aus einer Sitzlehne SL und Sitzfläche SF bestehenden Personensitzes SI. Erfindungsgemäß setzt sich dabei der aktuelle Wert der absoluten Sitzflächenhöhe AS in Bezug auf eine Aufstellfläche B aus zwei Anteilen zusammen. Der erste, stationäre Grundanteil SH weist einen, von den äußeren Störgrößen unabhängigen festen Wert auf. Demgegenüber kann der zweite, quasistationäre Regelanteil VA auf Grund der Anregung der Sitzfederung durch äußere Störgrößen vorübergehend gedämpfte Schwingungen ausführen. Der Istwert des quasistationären Regelanteiles VH kann innerhalb eines, eine obere und untere Begrenzung OG, UG aufweisenden Schwingbereiches SB gedämpfte Schwingungen um einen im Schwingbereich liegenden Sollwert VH* ausführen. Wunschgemäß soll im stationären Fall und im zeitlichen Mittel der Wert des zweiten, quasistationären Regelanteiles VH die Größe des im Schwingbereich SB liegenden Sollwertes VH* zumindest unabhängig vom jeweiligen Gewicht einer auf dem Sitz ruhenden Person einnehmen. Der Sollwert stellt somit eine Art Ruhelage dar, welche sowohl im belasteten als auch unbelasteten Zustand des Sitzes zumindest im zeitlichen Mittel erreicht werden soll.

In der WO 91/04168 wird ein Fahrzeugsitz beschrieben, der ein mittels einer Luftfeder abgefedertes mechanisches Schwingsystem aufweist. Ein Schwinghub-Sensor erfaßt permanent die absoluten Hubistwerte des Schwingsystems. Ein Mikroprozessor vergleicht das derart gebildete elektrische Schwingungsabbild des Schwingsystems mit voreingestellten Ereignis-Sollwerten und be- oder entlüftet die Luftfeder im Falle von Abweichungen. Über einen ersten Ereignis-Sollwert kann die statische Soll-Mittellage des Sitzes vorgegeben werden. In diese Soll-Mittellage wird der Sitz nach Aktivierung hochgefahren. Über einen zweiten Ereignis-Sollwert kann das Schwingverhalten des Sitzes überwacht werden. Dieser hat einen nahe unterhalb des Wertes der Mittellage des Sitzes liegende Größe. Bei dessen Erreichung wird der Hochfahrvorgang des Sitzes kurz vor der statischen Soll-Mittellage abgebrochen. Mit dem zweiten Ereignis-Sollwert kann somit eine Hysterese um den Wert der statischen Soll-Mittellage erzeugt werden, um ein dauerndes Pendeln des Systems um diesen Wert zu vermeiden. Schließlich kann bei Bedarf aus den absoluten Hubistwerten des Schwingungsabbildes zusätzlich durch eine einmalige Zeitdifferenzierung ein Geschwindigkeitssignal und durch eine zweimalige Zeitdifferenzierung ein Beschleunigungssignal abgeleitet werden, die zur Steuerung eines Zusatzluftvolumens, bzw. eines Stoßdämpfers, bzw. eines Zusatzstoßdämpfers verwendet werden können.

Erfindungsgemäß wird hierzu der Istwert des zweiten, quasistationären Regelanteiles VH als absolute Meßgröße kontinuierlich erfaßt und hieraus ein zeitlicher Mittelwert VHm gebildet. Erfindungsgemäß wird dann der quasistationäre Regelanteil derart nachgeführt, daß dessen Mittelwert im zeitlichen Mittel annähernd die Größe des Sollwertes annimmt.

Die erfindungsgemäße, kontinuierliche Meßwerterfassung des Regelanteiles, die anschließende Mittelwertbildung und schließlich die nachführung des Mittelwertes des Regelanteils haben den Vorteil, daß die Funktionen "Sitzfederung" und "Nachführung des Regelanteiles auf den Sollwert" voneinander entkoppelt sind. Da gleichmäßige Schwingungen der Sitzfederung die aktuelle Größe des Mittelwertes kaum verändern, wird die Aktivität der Sitzfederung im Normalfall nicht durch Maßnahmen zur Nachführung des quasistationären Regelanteiles behindert. Ein Nachführen wird erst dann ausgelöst, wenn der zeitliche Mittelwert des quasistationären Regelanteiles andauernd vom Sollwert abweicht. Aufgrund der Entkopplung der Funktionen "Federung" und "Nachführung" kann dann ein gegebenenfalls vorhandenes Toleranzband um den Sollwert, in dem die Größe des zeitlichen Mittelwertes sich aufhalten soll, sehr klein gewählt werden. Der Mittelwert des Regelanteiles kann somit sehr genau auf den Sollwert nachgeführt werden.

Die erfindungsgemäße Aufteilung der absoluten Sitzflächenhöhe in den Grund- und Regelanteil und die erfindungsgemäße Nachführung des Regelanteiles haben den Vorteil, daß ein vorgegebener, insbesondere von der jeweiligen Größe der auf dem Sitz ruhenden Person abhängiger Sollwert für die absolute Sitzflächenhöhe unabhängig vom Einfluß äußerer Störgrößen eingestellt und aufrechterhalten wird. Insbesondere nimmt der Istwert des quasistationären Regelanteiles VH im zeitlichen Mittel zumindest unabhängig vom jeweiligen Gewicht einer auf dem Sitz ruhenden Person die Größe des Sollwertes ein. Besonders vorteilhaft werden hierdurch aber auch alle weiteren Störeinflüsse kompensiert, welche im zeitlichen Mittel eine bleibende Regelabweichung des aktuellen Istwertes des quasistationären Regelanteiles vom Sollwert verursachen. Es können somit insbesondere alle von der Sitzmechanik selbst hervorgerufene und z.B. auf Verschleiß, innere Reibungen und dergleichen beruhende Störeinflüsse so kompensiert werden, daß das äußere Regelverhalten des einstellbaren, gefederten Personensitzes über einen langen Zeitraum konstant bleibt.

Gemäß einer besonders vorteilhaften, weiteren Ausgestaltung des erfindungsgemäßen Verfahrens wird dem Sollwert VH* für den zweiten, quasistationären Regelanteil VH der absoluten Sitzhöhe AS ein unveränderlicher, fester Wert zugeordnet. Dieser liegt bevorzugt annähernd in der Mitte des Schwingbereiches SB der Sitzfederung oder geringfügig oberhalb dieser Mittenposition. Die körpergrößenabhängige, optimale Einstellung einer jeweils gewünschten Sitzflächenhöhe AS wird erfindungsgemäß dann durch Anpassung des ersten, stationären Grundanteiles SH bewerkstelligt. Eine derartige Ausführung hat den Vorteil, daß die Funktionen "Sitzhöheneinstellung" und "Sitzfederung" voneinander entkoppelt sind. So wird der zweite, quasistationäre Regelanteil VH unabhängig von der Belastung sowohl im eingeschwungenen Zustand als auch im zeitlichen Mittel beim Auftreten von gedämpften Schwingungen des Sitzes auf den annähernd in der Mitte des Schwingbereiches SB liegenden Sollwert VH* nachgeführt. Für die Federung des Sitzes steht somit innerhalb der oberen und unteren Begrenzung OG bzw. UG ständig annähernd der gleiche positive und negative maximale Hub zur Verfügung.

FIG. 1 zeigt desweiteren eine gemäß der Erfindung gestaltete Vorrichtung zur Einstellung und störgrößenunabhängigen Aufrechterhaltung der absoluten Sitzfläche eines gefederten Personensitzes. Sie verfügt über Mittel zu Bereitstellung des ersten, stationären Grundanteiles SH und weitere Mittel zur Bereitstellung des zweiten, quasistationären Regelanteiles VH der absoluten Sitzflächenhöhe AS. Im Beispiel der FIG. 1 weist die Sitzmechanik M als Mittel SV zur Bereitstellung des stationären Grundanteiles ein bevorzugt servogetriebenes erstes Scherengitter S1 auf. Hiermit kann eine Zwischenplatte ZP in einen festen Abstand gegenüber einer als Aufstellfläche dienenden Grundfläche B positioniert werden.

Auf dieser Zwischenplatte ZP sind die Mittel zur Bereitstellung des quasistationären Regelanteiles VH und darauf der eigentliche Personensitz SI angebracht. Erfindungsgemäß weisen diese Mittel zusätzlich gefederte Höheneinstellmittel zur Einstellung des quasistationären Regelanteiles auf, welche gedämpfte Schwingungen des Sitzes um den Sollwert für den Regelanteil zulassen. Im Beispiel der FIG. 1 dient als derartiges Mittel FE zur quasistationären Sitzfederung beispielhaft auf der Zwischenplatte ZP ein druckluftbetriebener Faltenbalg FB. Der Einsatz einer derartigen pneumatischen Feder als gefederte Höheneinstellmittel hat zudem den Vorteil, daß erfindungsgemäß die Regeleinrichtung derart darauf eingreifen kann, daß der Istwert des Regelanteiles VH der absoluten Sitzflächenhöhe AS sowohl im stationären Fall als auch im zeitlichen Mittel die Größe eines Sollwertes VH* einnimmt. Der Faltenbalg dient somit auch als Hubmittel zur erfindungsgemäßen Nachführung des quasistationären Regelanteiles VH. Im Beispiel der FIG. 1 ist schließlich ein zweites, mit der Zwischenplatte ZP verbundenes Scherengitter S2 insbesondere zur seitlichen Führung des auf dem Faltenbalg FB ruhenden Personensitzes SI vorhanden. Zur weiteren Dämpfung von Schwingungen des im wesentlichen aus dem Sitz SI einer darauf ruhenden Person und dem seitengeführten Faltenbalg FB bestehenden Feder/Massesystemes kann ein zusätzlicher Dämpfer D vorgesehen sein.

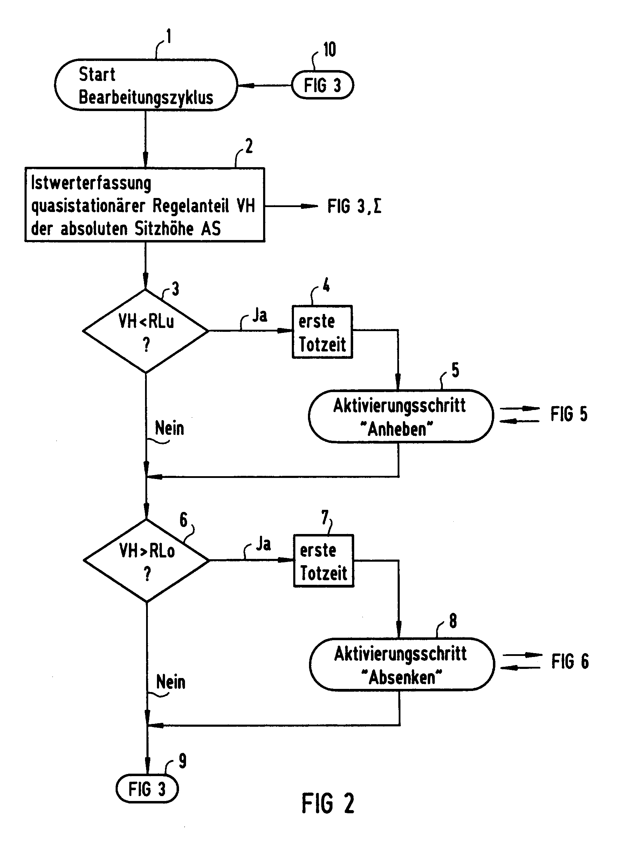

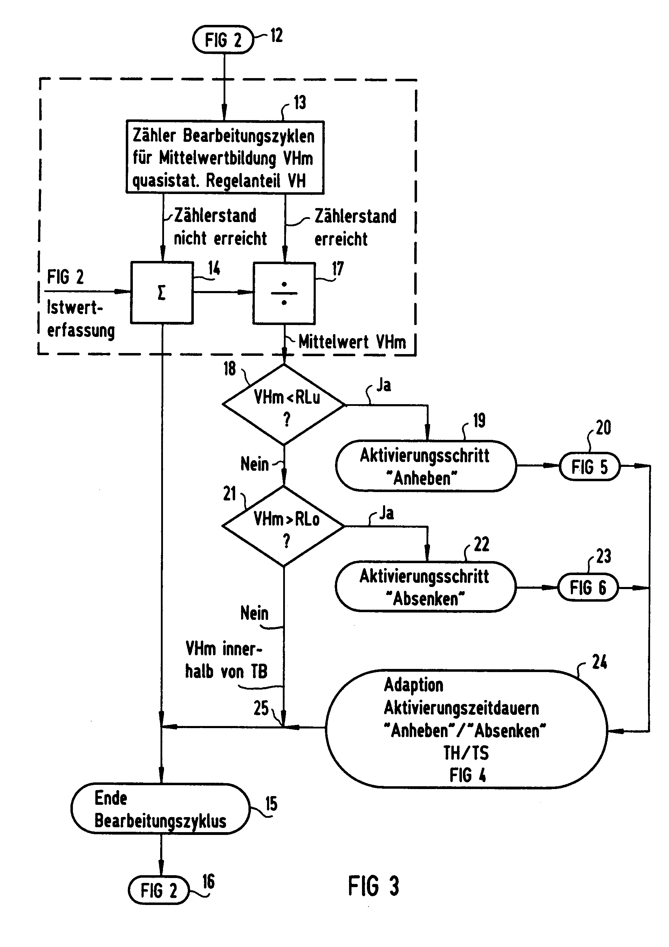

Unter Zuhilfenahme der weiteren Figuren 2 bis 6 wird im folgenden eine beispielhafte, programmtechnische Realisierung der erfindungsgemäßen Regelvorrichtung zur Beeinflussung des zweiten, quasistationären Regelanteiles der absoluten Sitzflächenhöhe näher erläutet.

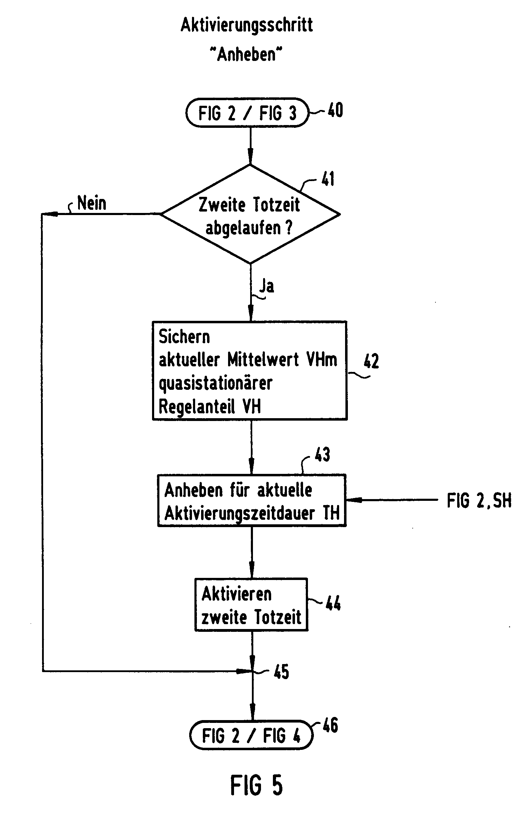

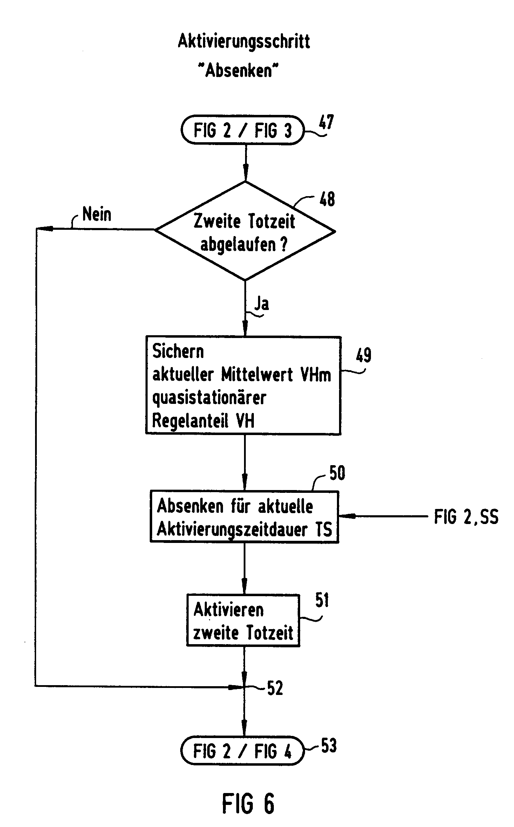

Das eigentliche Bearbeitungsprogramm, welches zyklisch in kurzen Zeitabständen, z.B. alle 10 bis 20 Millisekunden, durchlaufen wird, ist blockschaltbildartig in den Figuren 2 und 3 dargestellt. Dabei wird der Bearbeitungszyklus mit dem Programmaufruf 1 gestartet, verzweigt mit den Programmaufrufen 9, 12 von FIG. 2 auf 3 und springt am Ende des Durchlaufes mit den Programmaufrufen 16, 10 an den Start 1 nach FIG. 2 zurück. Es schließt sich eine Istwerterfassung 2 an, mit der der aktuelle Wert des quasistationären Regelanteiles VH der absoluten Sitzhöhe AS abgetastet wird. Mit den darauffolgenden Abfrageschritten 3, 6 wird festgestellt, ob der bei der Istwerterfassung 2 detektierte aktuelle Wert von VH innnerhalb eines in FIG. 1 dargestellten und um den Sollwert VH* liegenden Toleranzbereiches TB liegt. So wird in den Abfrageschritten 3 bzw. 6 überprüft, ob VH kleiner bzw. größer als eine untere bzw. obere Grenze RLo bzw. RLu des Toleranzbereiches TB ist. Falls der Istwert VH innerhalb des Toleranzbereiches liegt, die Abfragen 3, 6 folglich mit nein beantwortet werden, muß die Regeleinrichtung nicht nachführend auf die gefederten Höheneinstellmittel eingreifen. Das Programm wird dann mit dem auf FIG. 3 verweisenden Fortsetzungselement 9 weitergeführt. Falls dagegen die Abfragen 3, 6 eine Unter- bzw. Überschreitung der Toleranzbereichsgrenzen RLu, RLo signalisieren, wird entsprechend den Programmschritten 5 bzw. 8 ein Aktivierungsschritt "Anheben" bzw. "Absenken" ausgelöst. Im Beispiel der FIG 1 beaufschlagt hierbei die Regeleinrichtung den pneumatischen Faltenbalg FB für eine vorgegebene Aktivierungszeitdauer mit Druckluft bzw. läßt Luft für eine vorgegebene Aktivierungszeitdauer ab. Die für die Aktivierungsschritte "Anheben" bzw. "Absenken" notwendigen Programmschritte sind in je einem Unterprogrammteil zusammengefaßt und in den Figuren 5, 6 dargestellt. Dementsprechend verweisen die Programmschritte 5, 8 in FIG. 2 mit Doppelpfeilen auf die Unterprogrammteile in den Figuren 5, 6.

Gemäß einer weiteren, in FIG. 2 bereits dargestellten Ausführungsform der Erfindung werden die Regeleinrichtung gesperrt und somit die gefederten Höheneinstellmittel FE, FB nicht aktiviert, wenn der detektierte Istwert des quasistationären Regelanteiles VH der absoluten Sitzflächenhöhe AS die untere bzw. obere Grenze RLu, RLo des Toleranzbereiches TB um den Sollwert VH* des quasistationären Regelanteiles VH nur maximal für die Dauer einer ersten Totzeit, d.h. nur kurzzeitig unter- bzw. überschreitet. Derartige Abweichungen können z.B. dann auftreten, wenn die auf dem Sitz ruhende Person sich kurzzeitig erhebt bzw. z.B. auf einem Lenkrad eines Kraftfahrzeuges abstützt. Im Beispiel der FIG. 2 wird diese Totzeit in den Programmschritten 4, 7 verarbeitet. Solange die Totzeit noch nicht abgelaufen ist, kann das Programm nicht von den Programmschritten 3 bzw. 6 kommend mit den Schritten 5 bzw. 8 fortgesetzt werden. Falls anderseits auch nach Ablauf der ersten Totzeit eine Unter- bzw. Überschreitung von RLu bzw. RLo mittels bei den Anfragen 3, 6 festgestellt wird, so wird VH über die Aktivierungsschritte 5 bzw. 8 direkt auf VH* nachgeführt. Ein derartiger Fall kann z.B. auftreten, wenn sich die Person vom Sitz erhoben und diesen verlassen hat.

Die beispielhafte programmtechnische Realisierung der Erfindung gemäß den Figuren 2, 3 hat den Vorteil, daß die hierdurch repräsentierte Regeleinrichtung die gefederten Höheneinstellmittel FB in Form von einzelnen Aktierungsschritten stufenweise betätigt. So werden beispielsweise im Falle einer größeren Unterschreitung der unteren Grenze RLu des Toleranzbereiches durch den Istwert VH der Programmschritt 5 in FIG. 2 mehrfach durchlaufen. Dabei wird jeweils ein neuer Aktivierungsschritt "Anheben" ausgelöst, welcher für das Beispiel in FIG. 1 eine Beaufschlagung des Faltenbalges FB mit Speisedruck für eine vorgegebene Aktivierungszeitdauer zur Folge hat. Diese schrittweise Nachführung des Istwertes von VH hat zur Folge, daß der angestrebte Sollwert VH* durch die Regeleinrichtung harmonisch "angefahren" wird. Hierdurch werden für eine auf dem Sitz ruhende Person unangenehme, stoßartige Änderungen der Sitzflächenhöhe vermieden. Vielmehr bewirkt die stufenweise Betätigung der gefederten Höheneinstellmittel ein benutzerfreundliches Zeitverhalten beim Ausgleich von störgrößenbedingten Abweichungen.

FIG. 3 zeigt in Fortsetzung von FIG. 2 den zweiten Teil der die erfindungsgemäße Regelvorrichtung zur Beeinflussung der gefederten Höheneinstellmittel repräsentierenden programmtechnischen Realisierung. Dabei folgen auf ein auf FIG. 2 verweisendes Fortsetzungselement 12 die Programmschritte 13, 14, 17, welche die Bildung eines zeitlichen Mittelwertes VHm des quasistationären Regelanteiles betreffen. Hierzu wird zunächst im Programmschritt 13 die für die Mittelwertbildung vorgesehene Anzahl von Bearbeitungszyklen des in den Figuren 2, 3 dargestellten Programmes gezählt. Bei jedem Programmdurchlauf wird der aktuelle Istwert des quasistationären Regelanteiles VH von der Istwerterfassung 2 abgetastet und zum Inhalt einer Speicherzelle 14 summiert. Falls der für die Mittelwertbildung vorgesehene Zählerstand im Programmschritt 13 noch nicht erreicht ist, wird der jeweilige Bearbeitungszyklus über den Programmschritt 15 beendet, und das Programm kehrt über die Sprungadressen 16, 10 für einen erneuten Programmdurchlauf zum Startpunkt 1 in FIG 2 zurück. Ist bei einem der zyklischen Programmdurchläufe der für die Mittelwertbildung vorgesehene Zählerstand im Programmschritt 13 erreicht, so wird mit Hilfe eines Divisionsschrittes 17 der Mittelwert VHm des quasistationären Regelanteiles VH gebildet. Hierzu wird der aktuelle Wert der Speicherzelle 14 durch den Zählerstand von 13 dividiert, und anschließend die Elemente 13, 14 für eine erneute Bildung des Mittelwertes rückgesetzt.

Der Mittelwert VHm kann nun in den Programmschritten 18 bis 25 einer weiteren Bearbeitung unterzogen werden. Diese hat im Gegensatz zu dem Programmteil von FIG. 2 das Ziel, langfristige Abweichungen des quasistationären Regelanteiles auszugleichen, welche sich in einem allmählichen "Abdriften" des Mittelwertes VHm vom vorgegebenen Sollwert VH* äußern.

So wird in den Abfrageschritten 18, 21 der Mittelwert VHm wiederum daraufhin überwacht, ob dieser die untere bzw. obere Grenze RLu, RLo des Toleranzbereiches TB um den Sollwert VH* unter- bzw. überschritten hat. Falls der Mittelwert VHm innerhalb des Toleranzbereiches liegt, die Abfragen 18, 21 folglich negativ beantwortet werden, so wird der jeweilige Bearbeitungszyklus über die Programmschritte 15, 16 auf den Startpunkt 1 rückgesetzt. Falls andererseits die Abfragen 18, 21 eine Verletzung der Grenzen RLu, RLo signalisieren, so werden wiederum auf die gefederten Höheneinstellmittel einwirkende Aktivierungsschritte "Anheben" 19, 20 bzw. "Absenken" 22, 23 freigegeben. Entsprechend dem ersten Programmteil von FIG. 2 werden auch hier diese Aktivierungsschritte durch die Verzweigungen 20, 23 auf die Unterprogrammteile der Figuren 5, 6 realisiert. Nach Ablauf des jeweiligen Aktivierungsschrittes wird der Bearbeitungszyklus über den Knotenpunkt 25 und die Elemente 15, 16 beendet.

Die Überwachung des zeitlichen Mittelwertes VHm des quasistationären Regelanteiles auf Verletzung der Grenzen RLu, RLo des Toleranzbereiches TB hat den Vorteil, daß langfristige, z.B. verschleiß- bzw. jahreszeitlich bedingte Abweichungen des quasistationären Regelanteiles vom vorgegebenen Sollwert im zeitlichen Mittel kompensiert werden können. Es ist hiermit sogar möglich, zumindest vorübergehend kleinere Fehler in der Sitzmechanik auszugleichen, z.B. Leckagen bei einem als gefedertes Höheneinstellmittel dienenden Faltenbalg.

In FIG. 5 sind beispielhaft in einem Unterprogrammteil die Programmschritte zusammengefaßt, welche in einem Aktivierungsschritt zum "Anheben" der gefederten Höheneinstellmittel benötigt werden. Dabei wird das Unterprogramm über einen Programmaufruf 40 vom Programmschritt 5 in FIG. 2 bzw. 20 in FIG. 3 aktiviert. Die eigentliche Betätigung der Höheneinstellmittel erfolgt über den Programmschritt 43 durch Anheben für die Dauer einer vorgegebenen Aktivierungszeit TH. Vorteilhaft wird in einem davorliegenden Programmschritt 42 der bisher gültige Mittelwert VHm des stationären Regelanteiles VH gesichert. In einem sich anschließenden Programmschritt 44 wird schließlich eine zweite Totzeit aktiviert. Diese hat zur Folge, daß mit Hilfe einer programmtechnischen Verzweigung 41 am Programmbeginn die Programmschritte 42, 43, 44 bei erneutem Aktivieren des Unterprogrammes solange übersprungen werden, bis die Totzeit abgelaufen ist.

Die Aktivierung der zweiten Totzeit im Programmschritt 44 unmittelbar nach Auslösung eines Aktivierungsschrittes im Programmschritt 43 hat zur Folge, daß das Unterprogramm "Anheben" für die Dauer der zweiten Totzeit blockiert ist, und erst nach deren Ablauf ein erneuter Aktivierungsschritt "Anheben" mit der Zeitdauer TH ausgelöst werden kann. Hierdurch können Übergangsvorgänge, welche durch den vorangegangenen Aktivierungschritt in der Sitzmechanik ausgelöst werden, abklingen, bevor ein neuer Aktivierungsschritt auslösbar ist. Erst nach Ablauf der zweiten Totzeit steht nämlich ein auswertbarer Istwert für den quasistationären Regelanteil zur Verfügung, so daß der durch den Aktivierungsschritt erreichte positive bzw. negative Hub bestimmt werden kann. Erst dann kann sicher beurteilt werden, ob der vorangegangene Aktivierungsschritt bereits ausreichend war, um den Istwert des quasistationären Regelanteiles wieder auf den Sollwert VH* nachzuführen, oder ob hierzu noch weitere Aktivierungschritte notwendig sind.

FIG. 6 zeigt einen weiteren Unterprogrammteil für einen ein "Absenken" der gefederten Höheneinstellmittel bewirkenden Aktivierungsschritt der Regeleinrichtung. Dabei entsprechen im Prinzip die Programmschritte 47 bis 53 den an FIG. 5 erläuterten Programmschritten 40 bis 46. Im wesentlichen Programmschritt 50 wird das "Absenken" der gefederten Höheneinstellmittel für die Dauer einer vorgegebenen Aktivierungszeit TS ausgelöst. Im übrigen entspricht das Unterprogramm von FIG. 6 vollständig dem von FIG. 5, so daß zum Verständnis auf die dortigen Erläuterungen verwiesen wird.

Gemäß einer weiteren Ausführungsform der Erfindung ist die Regeleinrichtung derart ausgebildet, daß diese die Zeitdauern TH bzw. TS der einzelnen Aktivierungsschritte "Anheben" bzw. "Absenken" anpaßt. Dabei wird erfindungsgemäß die jeweilige Aktivierungszeitdauer TH, TS pro erneutem Programmdurchlauf dann um einen Zeitanteil vergrößert bzw. verkleinert, wenn nach Ablauf des vorangegangenen Aktivierungschrittes mit gleicher Aktivierungsrichtung der dabei erreichte positive bzw. negative Hub einen vorgegebenen Minimalwert nicht überschritten bzw. einen Maximalwert überschritten hat. Im Flußdiagramm der FIG.3 ist eine derartige "Adaption" der Aktivierungszeitdauern für die Fälle des Anhebens bzw. Absenkens im Programmschritt 24 angedeutet.

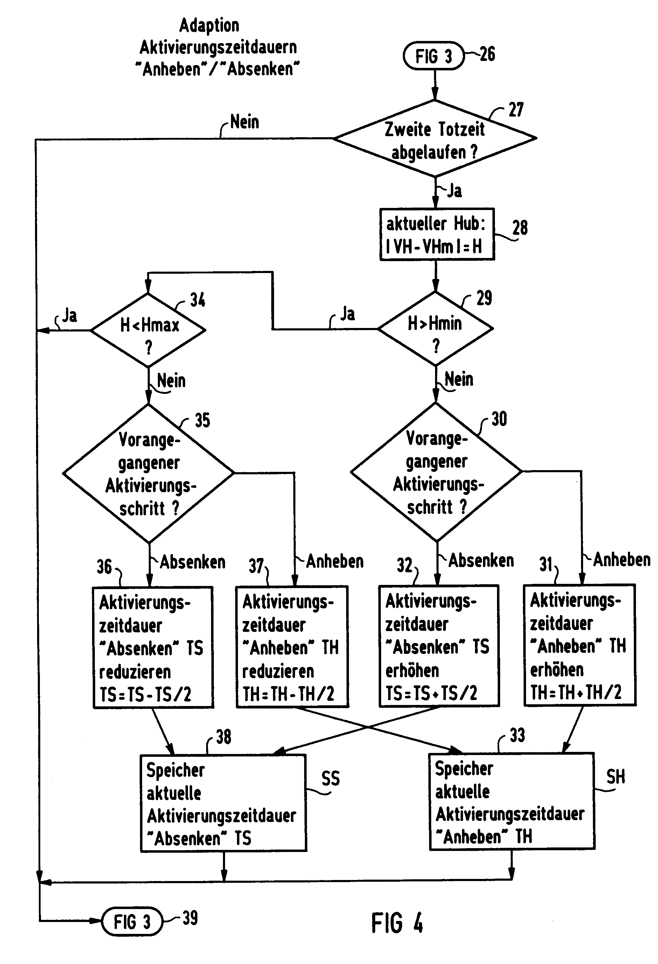

Bei der als Beispiel zugrundegelegten programmtechnischen Realisierung der erfindungsgemäßen Regelvorrichtung wird diese Adaption der Aktivierungszeitdauern wiederum in einem separaten Unterprogrammteil vorgenommen, welches in der FIG. 4 dargestellt ist, über den Programmschritt 24 in FIG. 3 aufgerufen und im Anschluß an einen Aktivierungsschritt "Anheben" 19, 20 bzw. "Absenken" 22, 23 durchlaufen wird. Der Programmaufruf 26 zu Beginn zeigt dabei den Verweis von FIG. 3. In dem sich anschließenden Abfrageschritt 27 wird wiederum überprüft, ob eine im Anschluß an einen vorangegangenen Aktivierungsschritt mittels der Programmschritte 44 in FIG. 5 bzw. 51 in FIG. 6 gestartete zweite Totzeit bereits abgelaufen ist. Ist dies nicht der Fall, so wird in der gleichen Weise wie bei den Unterprogrammteilen der Figuren 5, 6 auch der Unterprogrammteil von FIG. 4 durch Sprung auf das Fortsetzungselement 39 vorzeitig beendet.

Der eigentliche Eintritt in das Unterprogramm wird vom Abfrageelement 27 erst nach Ablauf der zweiten Totzeit freigegeben. Dann wird in einem Programmschritt 28 der Wert des durch den vorangegangenen Aktivierungsschritt der gefederten Höheneinstellmittel erreichten Hubes H bestimmt. Dessen Wert entspricht in dem Ausführungsbeispiel dem Betrag der Differenz zwischen dem Istwert VH des quasistationären Regelanteiles und der aktuellen Größe des dazugehörigen zeitlichen Mittelwertes VHm. In den anschließenden Abfrageelementen 29, 34 wird überprüft, ob dieser Hub H einen Minimalwert Hmin überschritten bzw. einen vorgegebenen Maximalwert Hmax unterschritten hat. Werden beiden Fragen positiv beantwortet, so kann wiederum durch Sprung auf den Programmschritt 39 das Unterprogramm vorzeitig beendet werden. Der Programmablauf wird dann in FIG. 3 im Anschluß an den Programmschritt 24 in üblicher Weise fortgesetzt.

Falls dagegen einer der Abfrageschritte 29, 34 ein negatives Ergebnis signalisiert, so wird erfindungsgemäß die Zeitdauer des jeweiligen Aktivierungsschrittes angepaßt.

Falls im Beispiel der FIG. 4 das Abfrageelement 29 ein negatives Ergebnis signalisiert, ist der durch den vorangegangenen Aktivierungsschritt erreichte Hub zu klein, so daß mit Hilfe der nachfolgenden Programmschritte 30 bis 33 die jeweilige Aktivierungszeitdauer erhöht wird. Signalisiert in entsprechender Weise der Abfrageschritt 34 ein negatives Ergebnis, so weist der durch den vorangegangenen Aktivierungsschritt erreichte Hub einen unzulässig großen Wert auf. Dementsprechend werden mit Hilfe der nachfolgenden Programmschritte 35 bis 38 die dazugehörigen Zeitdauern der Aktivierungsschritte reduziert.

Im Falle einer notwendigen Erhöhung der Aktivierungszeitdauern wird im Abfrageelement 30 zunächst festgestellt, ob der vorangegangene Aktivierungsschritt ein Absenken bzw. Anheben der gefederten Höheneinstellmittel ausgelöst hat. Im Falle einer vorangegangenen Absenkung wird im Programmschritt 32 die Aktivierungszeitdauer "Absenken" TS erhöht, während bei einer vorangegangenen Anhebung im Programmschritt 31 die Aktivierungszeitdauer "Anheben" TH erhöht wird. Vorteilhaft werden die somit gebildeten aktuellen Werte der Aktivierungszeitdauern für Absenken bzw. Anheben in separaten Speicherelementen 38 bzw. 33 hinterlegt. Deren Inhalte stehen insbesondere den Programmschritten 43 bzw. 50 in den Unterprogrammteilen der Figuren 5, 6 zur Verfügung.

In entsprechender Weise wird im Abfrageschritt 35 bei Auftreten eines zu großen Hubes zunächst nachgeprüft, ob der vorangegangene Aktivierungschritt ein Absenken bzw. Anheben der gefederte Höheneinstellmittel ausgelöst hat. Im Falle einer vorangegangenen Absenkung wird im Programmschritt 36 die Aktivierungszeitdauer "Absenken" TS reduziert, während im Falle einer vorangegangenen "Anhebung" im Programmschritt 37 die Aktivierungszeitdauer "Anheben" TH reduziert wird. Auch hier ist es wiederum vorteilhaft, wenn die auf diese Weise gebildeten aktuellen Aktivierungszeitdauern für Absenken bzw. Anheben in den separaten Speicherelementen 38 bzw. 33 hinterlegt werden.

Gemäß einer weiteren, im Blockschaltbild der FIG. 4 bereits dargestellten Ausführungsform der Erfindung werden pro Durchlauf des zur Adaption der Aktivierungszeitdauer dienenden Unterprogrammes die jeweiligen Zeiten TH bzw. TS vorteilhaft um die Hälfte ihres bisherigen Wertes vergrößert bzw. verkleinert. So wird in den Programmschritten 32, 31 die aktuelle Absenkzeitdauer TS um TS/2 bzw. die aktuelle Anhebezeitdauer TH um TH/2 vergrößert. In entsprechender Weise wird in den Programmschritten 36, 37 die aktuelle Absenkzeitdauer TS um TS/2 bzw. die aktuelle Anhebezeitdauer TH um TH/2 reduziert.

Die erfindungsgemäße Adaption der Aktivierungszeitdauern bevorzugt um jeweils die Hälfte des ursprünglich vorhandenen Wertes hat den Vorteil, daß im Falle eines wiederholten Durchlaufes des Unterprogrammteiles der FIG. 4 über die gleichen Programmschritte die jeweilige Aktivierungszeitdauer allmählich anwächst bzw. absinkt. Hierdurch wird ein besonders harmonisches Regelverhalten der gefederten Höheneinstellmittel erreicht. Ein derart progressives Sanftanfahren der Höheneinstellmittel stellt einen guten Kompromiß dar. Dabei wird einerseits eine auf dem Sitz ruhende Person nur allmählich länger- bzw. kürzer werdenden Hubstößen ausgesetzt. Zum anderen kann der Istwert des quasistationären Regelanteiles VH beim Auftreten von größeren Abweichungen trotzdem innerhalb einer relativ kurzen Regelzeit auf die Größe des Sollwertes VH* nachgeführt werden. Die jeweiligen Aktivierungszeitdauern verlängern bzw. verkürzen sich dann erfindungsgemäß abhängig von der Anzahl wiederholter Auslösungen progressiv. Ferner werden überlange Aktivierungszeitdauern von der Regeleinrichtung allmählich selbsttätig wieder zurückgenommen.

## Patentansprüche

1. Verfahren zur Einstellung und störgrößenunabhängigen Aufrechterhaltung der absoluten Sitzflächenhöhe (AS) eines gefederten Personensitzes (SI) insbesondere in einem Kraftfahrzeug, wobei
a) der Wert der absoluten Sitzflächenhöhe (AS) gebildet wird aus der Summe eines ersten, stationären Grundanteiles (SH) und eines zweiten, quasistationären Regelanteiles (VH),
b) der Istwert des zweiten quasistationären Regelanteiles (VH) als Meßgröße kontinuierlich erfaßt und zur Bildung eines zeitlichen Mittelwertes (VHm) herangezogen wird,
c) der Istwert des zweiten, quasistationären Regelanteiles (VH) gedämpfte Schwingungen um einen Sollwert (VH*) innerhalb eines Schwingbereiches (SB;OG,UG) ausführen kann, und
d) der zweite, quasistationäre Regelanteil (VH) zumindest unabhängig vom jeweiligen Gewicht einer auf dem Sitz ruhenden Person derart nachgeführt wird, daß dessen zeitlicher Mittelwert (VHm) innerhalb vorher festgelegter Grenzen die Größe des Sollwertes (VH*) annimmt.

2. Verfahren nach Anspruch 1, **dadurch gekennzeichnet,** daß
a) der Sollwert (VH*) für den zweiten, quasistationären Regelanteil (VH) der absoluten Sitzflächenhöhe (AS) einen festen Wert aufweist, und
b) ein aktueller Wert für die absolute Sitzflächenhöhe (AS) durch Anpassung des ersten, stationären Grundanteiles (SH) eingestellt wird.

3. Vorrichtung zur Einstellung und störgrößenunabhängigen Aufrechterhaltung der absoluten Sitzflächenhöhe (AS) eines gefederten Personensitzes (SI), insbesondere in einem Kraftfahrzeug, mit
a) Mitteln (SV;S1,ZP) zur Bereitstellung eines ersten, stationären Grundanteiles (SH) der absoluten Sitzflächenhöhe (AS), und mit darauf befindlichen weiteren
b) Mitteln (FE;S2,FB,D) zur Bereitstellung eines zweiten, quasistationären Regelanteiles (VH) der absoluten Sitzhöhe (AS), welche enthalten
b1) gefederte Höheneinstellmittel (FB) zur Einstellung des quasistationären Regelanteiles (VH) , welche gedämpfte Schwingungen (SB;OG,UG) des Sitzes (SI) um einen Sollwert (VH*) für den Regelanteil (VH) zulassen,
b2) eine Meßeinrichtung zur kontinuierlichen Erfassung des Istwertes (VH) des quasistationären Regelanteiles und zur Ableitung eines zeitlichen Mittelwertes (VHm) aus den Meßwerten, und
b3) eine Regeleinrichtung, welche auf die gefederten Höheneinstellmittel (FB) derart eingreift, daß der zeitliche Mittelwert (VHm) des quasistationären Regelanteiles (VH) der absoluten Sitzflächenhöhe (AS) zumindest unabhängig vom jeweiligen Gewicht einer auf dem Sitz ruhenden Person innerhalb vorher festgelegter Grenzen die Größe des Sollwertes (VH*) annimmt.

4. Vorrichtung nach Anspruch 3, **dadurch gekennzeichnet,** daß
a) den Mitteln (FE;S2,FB,B) zur Bereitstellung des quasistationären Regelanteiles (VH) ein unveränderlicher Sollwert (VH*) zugeführt wird, und
b) ein aktueller Wert für die absolute Sitzflächenhöhe (AS) durch Aktivierung der Mittel (SV;S1) zur Bereitstellung des stationären Grundanteiles (SH) eingestellt wird.

5. Vorrichtung nach Anspruch 3 oder 4, **dadurch gekennzeichnet**, daß die Regeleinrichtung ein Anheben bzw. Absenken des Sitzes (SI) durch Aktivierung der gefederten Höheneinstellung (FE;FB) veranlaßt, wenn der Istwert bzw. der aus den Meßwerten des quasistationären Regelanteiles (VH) der absoluten Sitzflächenhöhe (AS) gebildete zeitliche Mittelwert (VHm) eine untere bzw. obere Grenze (RLu bzw. RLo) eines Toleranzbereiches (TB) um den Sollwert (VH*) des quasistationären Regelanteiles (VH) unter- bzw. überschritten hat (FIG. 2).

6. Vorrichtung nach Anspruch 5, **dadurch gekennzeichnet,** daß die Regeleinrichtung gesperrt und somit die gefederten Höheneinstellmittel (FE;FB) nicht aktiviert werden, wenn der Istwert des quasistationären Regelanteiles (VH) der absoluten Sitzflächenhöhe (AS) die untere bzw. obere Grenze (RLu,RLo) des Toleranzbereiches (TB) um den Sollwert (VH*) des quasistationären Regelanteiles (VH) nur maximal für die Dauer einer ersten Totzeit unter- bzw. überschreitet (Fig.2).

7. Vorrichtung nach einem der Ansprüche 3 bis 6, **dadurch gekennzeichnet**, daß die Regeleinrichtung die gefederten Höheneinstellmittel (FB) in Form von Aktivierungsschritten stufenweise betätigt.

8. Vorrichtung nach Anspruch 7, **dadurch gekennzeichnet,** daß
a) die Regeleinrichtung und somit die gefederten Höheneinstellmittel (FB) nach Ablauf eines Aktivierungsschrittes für die Dauer einer zweiten Totzeit gesperrt werden, und
b) nach Ablauf der zweiten Totzeit die Regeleinrichtung die durch den Aktivierungsschritt erzielte Veränderung des Istwertes des quasistationären Regelanteiles (VH) der absoluten Sitzflächenhöhe (AS) erfaßt.

9. Vorrichtung nach Anspruch 7 oder 8, **dadurch gekennzeichnet**, daß die Regeleinrichtung die Zeitdauer (TH,TS) des aktuellen Aktivierungsschrittes anpaßt, indem die dazugehörige Aktivierungszeitdauer (TH,TS) um einen Zeitanteil vergrößert bzw. verkleinert wird, wenn der durch den vorangegangenen Aktivierungsschritt erreichte Hub (H) einen vorgegebenen Minimalwert (Hmin) nicht überschritten bzw. einen Maximalwert (Hmax) überschritten hat.

10. Vorrichtung nach Anspruch 9, **dadurch gekennzeichnet,** daß die jeweilige Aktivierungszeitdauer (TH,TS) um die Hälfte ± TH/2, ± TS/2 des ursprünglichen Wertes vergrößert bzw. verkleinert wird.

11. Vorrichtung nach Anspruch 9 oder 10, **dadurch gekennzeichnet,** daß die Regeleinrichtung einen ersten und einen zweiten Speicher (SH,SS) für die Archivierung der aktuellen Werte der Aktivierungszeitdauern (TH,TS) für das Anheben und das Absenken des Sitzes (SI) aufweist.

12. Vorrichtung nach einem der Ansprüche 3 bis 11, **gekennzeichnet**, **durch** eine ungefederte, servobetriebene Scherenhubvorrichtung (SV;S1,ZP) als Mittel zur Bereitstellung des ersten, stationären Grundanteiles (SH) der absoluten Sitzhöhe (AS).

13. Vorrichtung nach einem der Ansprüche 3 bis 12 **gekennzeichnet**, **durch** einen druckluftbetriebenen, pneumatischen Faltenbalg (FB) als gefederte Höheneinstellmittel (FE) für den zweiten, quasistationären Regelanteil (VH) der absoluten Sitzhöhe (AS).

## Claims

1. A method for the adjustment and maintenance, independently of interference factors, of the absolute seat surface height (AS) of a spring-action passenger seat (SI), in particular in a motor vehicle, where
a) the value of the absolute seat surface height (AS) is formed from the sum of a first, stationary basic component (SH) and a second, quasi-stationary regulation component (VH),
b) the actual value of the second, quasi-stationary regulation component (VH) is continuously detected as measured variable and used to form a time mean value (VHm),
c) the actual value of the second quasi-stationary regulation component (VH) can execute damped oscillations about a theoretical value (VH*) within an oscillating range (SB; OG, UG) and
d) the second, quasi-stationary regulation component (VH) is adjusted, at least independently of the respective weight of a person resting on the seat, in such manner that its time mean value (VHm) assumes the value of the theoretical value (VH*) within previously defined limits.

2. A method as claimed in Claim 1, characterised in that
a) the theoretical value (VH*) for the second, quasi-stationary regulation component (VH) of the absolute seat surface height (AS) possesses a fixed value and
b) an actual value of the absolute seat surface height (AS) is adjusted by adaptation of the first, stationary basic component (SH).

3. A device for the adjustment and maintenance, independently of interference factors, of the absolute seat surface height (AS) of a spring-action passenger seat (SI), in particular in a motor vehicle, with
a) means (SV; S1, ZP) for making available a first, stationary basic component (SH) of the absolute seat surface height (AS) and with further
b) means (FE; S2, FB, D), arranged on the said means (SV; S1, ZP) for making available a second, quasi-stationary regulation component (VH) of the absolute seat height (AS) which comprise
b1) spring-action height adjustment means (FB) for adjusting the quasi-stationary regulation component (VH) which permit damped oscillations (SB; OG, UG) of the seat (SI) about a theoretical value (VH*) for the regulation component (VH),
b2) a measuring device for continuously detecting the actual value (VH) of the quasi-stationary regulation component and for deriving a time mean value (VHm) from the measured values and
b3) a regulating device which acts on the spring-action height adjustment means (FB) in such manner that the time mean value (VHm) of the quasi-stationary regulation component (VH) of the absolute seat surface height (AS) assumes the value of the theoretical value (VH*), at least independently of the respective weight of a person resting on the seat, within previously defined limits.

4. A device as claimed in Claim 3, characterised in that
a) the means (FE; S2, FB, B) for making available the quasi-stationary regulation component (VH) are supplied with an invariable theoretical value (VH*) and
b) an actual value for the absolute seat surface height (AS) is adjusted by the activation of the means (SV; S1) for making available the stationary basic component (SH).

5. A device as claimed in Claim 3 or 4, characterised in that the regulating device brings about a raising or lowering of the seat (SI) by activating the spring-action height adjustment means (FE; FB) when the actual value or the time mean value (VHm), formed from the measured values of the quasi-stationary regulation component (VH) of the absolute seat surface height (AS), has undershot or overshot a lower or upper limit (RLu or RLo) respectively of a tolerance range (TB) around the theoretical value (VH*) of the quasi-stationary regulation component (VH) (Fig. 2).

6. A device as claimed in Claim 5, characterised in that the regulating device is blocked, and thus the spring-action height adjustment means (FE; FB) are not activated, when the actual value of the quasi-stationary regulation component (VH) of the absolute seat surface height (AS) undershoots or overshoots the lower or upper limit (RLu, RLo) respectively of the tolerance range (TB) around the theoretical value (VH*) of the quasi-stationary regulation component (VH) only at the maximum for the duration of a first dead time (Fig. 2).

7. A device as claimed in one of Claims 3 to 6, characterised in that the regulating device actuates the spring-action height adjustment means (FB) in stepped fashion in the form of activation steps.

8. A device as claimed in Claim 7, characterised in that
a) the regulating device, and thus the spring-action height adjustment means (FB), are blocked after the elapse of an activation step for the duration of a second dead time and
b) after the elapse of the second dead time the regulating device detects the change in the actual value of the quasi-stationary regulation component (VH) of the absolute seat surface height (AS) attained by means of the activation step.

9. A device as claimed in Claim 7 or 8, characterised in that the regulating device adapts the time period (TH, TS) of the current activation step in that the associated activation time period (TH, TS) is increased or reduced by a time component when the stroke (H), attained by means of the preceding activation step, has not overshot a predetermined minimum value (Hmin) or has overshot a maximum value (Hmax).

10. A device as claimed in Claim 9, characterised in that the respective activation time period (TH, TS) is increased or reduced by half ± TH/2, ± TS/2 of the original value.

11. A device as claimed in Claim 9 or 10, characterised in that the regulating device comprises a first and a second memory (SH, SS) for the storage of the actual values of the activation time periods (TH, TS) for the raising and lowering of the seat (SI).

12. A device as claimed in one of Claims 3 to 11, characterised by an unsprung, servo-operated scissors lift mechanism (SV; S1, ZP) as means for making available the first, stationary basic component (SH) of the absolute seat height (AS).

13. A device as claimed in one of Claims 3 to 12, characterised by a pneumatic bellows (FB), operated by compressed air, as spring-action height adjustment means (FE) for the second, quasi-stationary regulation component (VH) of the absolute seat height (AS).

## Revendications

1. Procédé pour régler et maintenir, d'une manière indépendante vis-à-vis de grandeurs parasites, la hauteur absolue (AS) de la surface d'un siège à suspension (SI) pour une personne, notamment dans un véhicule automobile, selon lequel
a) la valeur de la hauteur absolue (AS) de la surface du siège est formée à partir de la somme d'une première composante de base fixe (SH) et d'une seconde composante de régulation quasiment fixe(VH),
b) la valeur réelle de la seconde composante de régulation quasiment fixe (VH) est détectée continûment en tant que grandeur de mesure et est utilisée pour former une valeur moyenne dans le temps (VHm),
c) la valeur réelle de la seconde composante de régulation quasiment fixe (VH) peut exécuter des oscillations amorties autour d'une valeur de consigne (VH*) à l'intérieur d'une gamme d'oscillations (SB; OG, UG); et
d) la seconde composante de régulation quasiment fixe (VH) est asservie, au moins indépendamment du poids respectif d'une personne assise sur le siège, de telle sorte que sa valeur moyenne dans le temps (VHm) prend, à l'intérieur de limites fixées au préalable, la grandeur de la valeur de consigne (VH*).

2. Procédé suivant la revendication 1, caractérisé par le fait que
a) la valeur de consigne (VH*) pour la seconde composante de régulation quasiment fixe (VH) de la hauteur absolue (AS) de la surface du siège possède une valeur fixe, et
b) une valeur actuelle pour la hauteur absolue (AS) de la surface du siège est réglée par adaptation de la première composante de base fixe (SH).

3. Dispositif pour régler et maintenir, d'une manière indépendante vis-à-vis de grandeurs parasites, la hauteur absolue (AS) de la surface d'un siège à suspension (SI) pour une personne, notamment dans un véhicule automobile, comprenant
a) des moyens (SV;S2,ZP) pour préparer une première composante de base fixe (SH) de la hauteur absolue (AS) de la surface du siège, comportant
b) d'autres moyens (FE;S2,FB,D) situés sur ces premiers moyens et servant à préparer une seconde composante de régulation quasiment fixe (VH) de la hauteur absolue (AS) du siège et qui contiennent
b1) des moyens de réglage en hauteur à suspension (FB) pour régler la composante de régulation quasiment fixe (VH), et qui autorisent les oscillations amorties (SB; OG,UG) du siège (SI) autour d'une valeur de consigne (VH*) pour la composante de régulation (VH),
b2) un dispositif de mesure pour détecter en continu la valeur réelle (VH) de la composante de régulation quasiment fixe et pour dériver une valeur moyenne dans le temps (VHm) à partir des valeurs de mesure, et
b3) un dispositif de régulation qui agit sur les moyens de réglage en hauteur à suspension (FB) de telle sorte que la valeur moyenne dans le temps (VHm) de la composante de régulation quasiment fixe (VH) de la hauteur absolue (AS) de la surface du siège prend au moins la grandeur de la valeur de consigne (VH*), au moins indépendamment du poids d'une personne assise sur le siège, à l'intérieur de valeurs limites fixées au préalable.

4. Dispositif suivant la revendication 3, caractérisé par le fait que
a) une valeur de consigne invariable (VH*) est envoyée aux moyens (FE;S2,FB,B) pour préparer la composante de régulation quasiment fixe (VH), et
b) une valeur actuelle pour la hauteur absolue (AS) de la surface du siège est réglée pour l'activation des moyens (SV;S1) servant à préparer la composante de base fixe (SH).

5. Dispositif selon la revendication 3 ou 4, caractérisé en ce que le dispositif de régulation déclenche un soulèvement ou un abaissement du siège (SI) par activation du système de réglage en hauteur à suspension (FE;FB), lorsque la valeur réelle et la valeur moyenne dans le temps (VHm), formées à partir des valeurs de mesure de la composante de régulation quasiment fixe (VH) de la hauteur absolue (AS) de la surface du siège a dépassé, par valeurs inférieures ou supérieures (figure 2), une limite inférieure ou supérieure (RLu ou RLo) d'une plage de tolérances (TB), et ce de la valeur de consigne (VH*) de la composante de régulation quasiment fixe (VH).

6. Dispositif selon la revendication 5, caractérisé en ce que le dispositif de régulation est bloqué et par conséquent les moyens de réglage en hauteur à suspension (FE;FB) ne sont pas activés, lorsque la valeur réelle de la composante de régulation quasiment fixe (VH) de la hauteur absolue (AS) de la surface du siège dépasse, par valeurs inférieures ou supérieures (figure 2), la limite inférieure ou supérieure (RLu, RLo) de la plage de tolérances (TB), et ce de la valeur de consigne (VH*) de la composante de régulation quasiment fixe (VH) seulement au maximum pendant la durée d'un premier temps mort.

7. Dispositif selon l'une des revendications 3 à 6, caractérisé en ce que le dispositif de régulation actionne d'une manière échelonnée les moyens de réglage en hauteur à suspension (FB), sous la forme de pas d'activation.

8. Dispositif selon la revendication 7, caractérisé en ce que
a) le dispositif de régulation et par conséquent les moyens de réglage en hauteur à suspension (FB) sont bloqués après le déroulement d'un pas d'activation, pendant la durée d'un second temps mort, et
b) une fois écoulé le second temps mort, le dispositif de régulation détecte la variation, produite par le pas d'activation, de la valeur réelle de la composante de régulation quasiment fixe (VH) de la hauteur absolue (AS) de la surface du siège.

9. Dispositif selon la revendication 7 ou 8, caractérisé en ce que le dispositif de régulation adapte la durée (TH,TS) du pas actuel d'activation, en augmentant ou en réduisant, d'une composante temporelle, la durée d'activation associée (TH,TS), lorsque la course (H), atteinte sous l'effet du pas d'activation précédent, n'a pas dépassé, par valeurs supérieures, une valeur minimale prédéterminée (HMIN) ou a dépassé par valeurs supérieures une valeur (HMAX).

10. Dispositif selon la revendication 9, caractérisé en ce que la seconde durée d'activation (TH,TS) est accrue ou réduite de la moitié ±TH/2, ±TS/2 de la valeur initiale.

11. Dispositif suivant la revendication 9 ou 10, caractérisé par le fait que le dispositif de régulation comporte des première et seconde mémoires (SH, SS) pour la mémorisation des valeurs actuelles des durées d'activation (TS) pour le soulèvement et l'abaissement du siège (SI).

12. Dispositif selon l'une des revendications 3 à 11, caractérisé par un dispositif de soulèvement en ciseaux (SB,S1,ZB), non suspendu et actionné par une servocommande, en tant que moyen pour préparer la première composante de base fixe (SH) à la hauteur absolue (AS) du siège.

13. Dispositif selon l'une des revendications 3 à 12, caractérisé par un soufflet pneumatique (FB), commandé par de l'air comprimé, en tant que moyens de réglage en hauteur à suspension(FE) pour la seconde composante de régulation quasiment fixe (VH) de la hauteur absolue (AS) du siège.
